# EUROPÄISCHE PATENTSCHRIFT

(11) **EP 1 870 203 B1**
(45) Veröffentlichungstag und Bekanntmachung des Hinweises auf die Patenterteilung: **21.10.2009**
(21) Anmeldenummer: 07011806.2
(22) Anmeldetag: 15.06.2007
(51) Int. Cl.: B23Q 11/00, B23D 59/00

(54) **Werkzeugmaschine mit einer Absaughaube**
Machine tool with an extractor hood
Machine-outil dotée d'un capot d'aspiration

(30) Priorität: 20.06.2006 DE 102006028203
(43) Veröffentlichungstag der Anmeldung: 26.12.2007
(73) Patentinhaber: Leitz GmbH & Co. KG, 73447 Oberkochen (DE)
(72) Erfinder: Beyeler, Markus Johannes Ernesto, 73430 Aalen (DE); Kisselbach, Andreas, 73431 Aalen (DE); Graef, Jürgen Dr., 73447 Oberkochen (DE)
(74) Vertreter: Rehmann, Thorsten

(56) Entgegenhaltungen:
- DE-A1- 10 049 500
- DE-C1- 19 650 430
- US-A- 5 537 748

## Beschreibung

Die Erfindung betrifft eine Werkzeugmaschine, insbesondere Holzbearbeitungsmaschine, mit einem in Umdrehungsrichtung D rotierenden Werkzeug zur spanabhebenden Bearbeitung und einer das Werkzeug abdeckenden Absaughabe mit einer teilweise geöffneten Umfangswandung, die einen radialen Abstand A zum Werkzeug aufweist und die einen Absaugstutzen zum Absaugen von Spänen aufweist.

Eine gattungsgemäße Werkzeugmaschine ist beispielsweise aus der US 5,537,748 bekannt. In ihr werden Späne, die bei der spanabhebenden Bearbeitung des Werkstückes entstehen, beispielsweise durch eine Passage in einen Verwirbelungsbereich geleitet, aus dem sie mittels eines Absaugstutzens abgesaugt werden. Nachteilig ist hier, dass Späne und Stäube, die einmal an dieser Passage vorbei geflogen sind, nicht wieder zum Absaugstutzen geführt werden können, sondern dem durch die Rotation des Werkzeuges entstehenden Luftstrom folgen und hinten aus der Werkzeughaube wieder austreten.

Bei bekannten Ausführungen von Absaughauben ändern sich die Strömungsverhältnisse in der Haube sehr stark zwischen den Zuständen Leerlauf und Bearbeitung. Während der Bearbeitung ist die Haubenöffnung, durch die das Werkzeug in Interaktion mit dem Werkstück kommt, überwiegend durch das Werkstück verschlossen. Als Folge davon strömt nicht genügend Luft in die Haube nach und die Strömung in der Haube bricht zusammen. Es entstehen unkontrollierte Turbulenzen.

In der Regel verfügen solche Absaughauben im Einlassbereich der Späne über eine gerade Haubenwandung, die tangential zum Werkzeugumfang verläuft, so dass sich der Abstand zum Werkzeug in Drehrichtung zuerst verringert und dann wieder vergrößert. Dadurch entsteht vor dem engsten Querschnitt ein Staudruck, gegen den die Späne transportiert werden müssen.

Insbesondere massearme Späne und Stäube, die nur eine geringe kinetische Energie haben und deshalb mit der Luftströmung innerhalb der Haube geführt und transportiert werden müssen, werden unzureichend erfasst. Zum einen gelangen sie erst gar nicht in die Haube oder sie laufen in der Haube mit dem Werkzeug um und treten wieder aus. In dem Bereich hinter der Auslassöffnung für die Späne herrschen undefinierte Strömungszustände, da sich hier die Strömung von Absaugluft und Eigenventilation des Werkzeugs mehr oder weniger aufheben. Besonders tritt diese Problematik bei der Bearbeitung von MDF, Hartschaum sowie gips- oder zementgebundenen Werkstoffen in Erscheinung, wenn der staubförmige Anteil bei den Spänen überwiegt, bzw. die Späne eine geringe Masse besitzen.

Aus der DE 100 49 500 A1 ist eine Werkzeugmaschine, insbesondere eine Holzbearbeitungsmaschine, mit einem mindestens eine Schneide aufweisenden Werkzeug zur spanabhebenden Bearbeitung und einer das Werkzeug abdeckenden Absaughaube mit einer teilweise geöffneten Umfangswandung und einem Absauganschluss zum Absaugen von Spänen bekannt, bei der die Umfangswandung der Absaughaube im Bereich der Rotationsebene der mindestens einen Schneide des Werkzeugs konisch oder sphärisch gekrümmt ausgebildet ist und dass der Absauganschluss im Bereich des größten Durchmessers angeordnet ist.

Bei massearmen Spänen und Stäuben, die nur eine geringe kinetische Energie haben, besteht die Gefahr, dass sie nur unzureichend erfasst werden und gar nicht in die Haube gelangen oder nach dem Umlauf des Werkzeugs wieder aus der Haube austreten. Problematisch ist der Bereich in Drehrichtung hinter der Auslassöffnung für die Späne, da hier die Bewegungsrichtung der Werkzeugschneiden entgegen der Absaugrichtung verläuft und sich beide Strömungen gewissermaßen aufheben. Partikel, die an der Auslassöffnung vorbei geflogen sind, können nicht mehr abgesaugt werden und treten an der Bearbeitungsöffnung wieder aus der Haube aus. Bei massearmen Spänen und Stäuben hilft es auch nicht, die konische Form der Innenwandung für einen zweiten, axial versetzten Späneumlauf vorzusehen, da für diesen Späneumlauf eine gewisse kinetische Energie der Partikel erforderlich ist.

Aus der DE 196 50 430 C1 ist eine Schutzhaube für eine Kreissäge bekannt, bei der verschiedene Strömungsleitplatten so angeordnet sind, dass Strömungskanäle entstehen, in denen die durch die Rotation des Werkzeuges entstehenden Luftströmungen im Wesentlichen parallel zueinander in einen Absaugstutzen münden.

Auch in dieser Ausgestaltung können massearme Späne und Stäube, die an dem ersten Strömungskanal vorbei geflogen sind, dem Absaugstutzen nicht mehr zugeführt werden und treten aus der Schutzhaube der Kreissäge aus.

Von dieser Problemstellung ausgehend ist es Aufgabe der Erfindung, eine Werkzeugmaschine so zu verbessern, dass auch massearme Späne und Stäube abgesaugt werden können.

Zur Problemlösung zeichnet sich die gattungsgemäße Werkzeugmaschine dadurch aus, dass zur Erzeugung der Luftwirbel im Bereich des Absaugstutzens oder unmittelbar dahinter die Umfangswandung der Absaughaube mindestens einen Krümmungsradius aufweist, der kleiner ist als der Radius des Werkzeuges, so dass sich eine Umlenkung des Luftstromes entgegengesetzt zur Werkzeugdrehrichtung ergibt, derart, dass am Endpunkt der Umfangswandung im Bereich des Absaugstutzens der Richtungsvektor der Luftwirbel am Werkzeug und der Richtungsvektor der Luftwirbel gegensinnig gerichtet sind.

Vorzugsweise saugen die gegensinnig rotierenden Luftwirbel Luft von außen in die Absaughaube entgegen der Drehrichtung des Werkzeugs an.

Die Krümmung in der Haubenwandung kann kreisbogenförmig sein und erstreckt sich vorteilhafterweise über einen Bereich von 90 ° bis 270 °. So kann sichergestellt werden, dass ein ausreichender Luftwirbel erzeugt wird. Es hat sich gezeigt, dass auch eine Krümmung von < 90° genügt, um einen ausreichenden Luftwirbel zu erzeugen. Die Krümmung der Haubenwandung kann sich insbesondere in einem Bereich von größer 90 ° oder größer 180 ° erstrecken.

Auf diese Weise wird eine Art Sperrluft in der Haube erzeugt, so dass über den Bereich nahezu keine Späne und Staubpartikel mehr aus der Absaughaube herausgelangen. Damit diese Sperrwirkung erreicht werden kann, müssen im Bereich des Absaugstutzens die Richtungsvektoren der Umdrehungsrichtung des Werkzeugs und des Luftwirbels entgegengesetzt sein. Auf diese Weise werden gegensinnig gerichtete rotierende Luftwirbel erzeugt, die die Partikel, die noch in den Spanräumen des Werkzeugs verblieben sind, aus diesen herauslösen und die Partikel dem Absaugstutzen zuführen. Mit dem Bereich des Absaugstutzens ist sowohl der bezogen auf die Umdrehungsrichtung D des Werkzeugs unmittelbar hinter dem Absaugstutzen liegende Teil der Umfangswandung als auch der Teil der Umfangswandung, in dem sich der Absaugstutzen befindet, gemeint. Wichtig ist, dass in diesem Bereich ein zur Umdrehungsrichtung D des Werkzeugs gegensinnig gerichteter Luftwirbel erzeugbar ist.

Es hat sich gezeigt, dass ruhende Späne, die in den Bereich hinter dem Absaugstutzen von außen an die umfangseitig offene Absaughaube gelangen, entgegen der Eigenventilation des Werkzeugs in die Absaughaube gezogen werden. Durch die im Inneren der Absaughaube erzeugten, gegensinnig zur Umdrehungsrichtung D des Werkzeugs rotierenden Luftwirbel wird also eine Art injektorwirkung hervorgerufen, die den Spantransport entgegen der Werkzeugdrehrichtung ermöglicht bzw. Luft von außen in die Absaughaube entgegen der Drehrichtung des Werkzeugs ansaugt, die als eine Art Sperrluft Späne aus den Spanräumen des Werkzeugs ablösen kann und der Absaugung zuführt.

Damit kein Staudruck zwischen Spänen und Stäuben und der Umfangswandung der Abdeckhaube entstehen kann, ist vorgesehen, dass der radiale Abstand A der Umfangswandung zum Werkzeug in Umdrehungsrichtung D des Werkzeugs zum Absaugstutzen hin nicht kleiner wird. Es ist vorgesehen, dass der radiale Abstand gleich bleibt oder sich vergrößert. Auf diese Weise kann auch verhindert werden, dass leichte Späne bereits an der Einlassöffnung der Haube wieder austreten. Das Werkzeug kann vollständig innerhalb der Absaughaube liegen oder zumindest teilweise aus der Absaughaube heraustreten.

Sollte diese Formgebung aus Platzgründen nicht möglich sein, sieht eine weitere Ausführungsform der Absaughaube vor, dass die Haubenwandung im Einlassbereich der Späne zunächst bereichsweise äquidistant zum Werkzeug verläuft und sich dann der radiale Abstand zum Werkzeug bis zur Auslassöffnung vergrößert.

Die erfindungsgemäße Werkzeugmaschine eignet sich gleichermaßen für die Bearbeitung im Gegenlauf (GGL) als auch im Gleichlauf (GLL). Damit möglichst alle Späne und Stäube in die Absaughaube hinein gelangen, ist es vorteilhaft, dass die Wandung der Absaughaube das Werkstück während der Bearbeitung in Durchlassrichtung teilweise umschließt.

Besonders vorteilhaft ist es dabei, wenn die Form der Durchlassöffnung der Absaughaube der Werkstückkontur entspricht. Bei der Bearbeitung im Gegenlauf ist das die Kontur des unbearbeiteten Werkstücks, bei einer Bearbeitung im Gleichlauf die Fertigkontur nach der Bearbeitung.

Damit immer genügend Luft in die Absaughaube nachströmen kann und die Luftwirbel aufrecht erhalten werden können, auch wenn die Arbeitsöffnung durch das Werkstück während der Bearbeitung weitgehend verschlossen ist, wird vorzugsweise in Umdrehungsrichtung D des Werkzeugs hinter dem Bereich des Luftwirbels der Absaughaube ein Schutzgitter oder ein Lochblech angeordnet, das luftdurchlässig ist.

Anhand einer Zeichnung sollen Ausführungsbeispiele der Erfindung nachfolgend näher erläutet werden. Es zeigt:
- Figur 1: eine schematische Darstellung einer ersten Werkzeugmaschine mit einem Werkzeug und einer Absaughaube;
- Figur 2: eine schematische Darstellung einer Absaughaube und eines Werkstücks;
- Figur 3: eine schematische Darstellung einer weiteren Werkzeugmaschine mit einem Werkzeug und einer Absaughaube;
- Figur 4: eine schematische Darstellung einer weiteren Werkzeugmaschine mit einem Werkzeug und einer Absaughaube;
- Figur 5: eine schematische Darstellung einer weiteren Werkzeugmaschine mit einem Werkzeug und einer Absaughaube;
- Figur 6: eine schematische Darstellung einer weiteren Werkzeugmaschine mit einem Werkzeug und einer Absaughaube und einem Werkstück;
- Figur 7: eine schematische Darstellung einer Absaughaube und eines Werkstücks;
- Figur 8: eine schematische Darstellung einer Werkzeugmaschine nach dem Stand der Technik und
- Figur 9: eine schematische Darstellung einer weiteren Werkzeugmaschine nach dem Stand der Technik mit einem Werkstück.

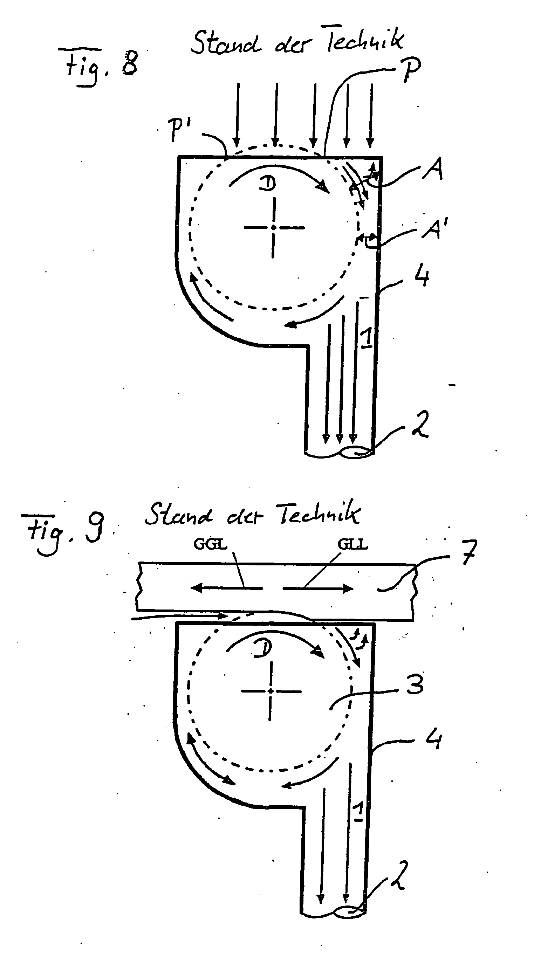

Figur 8 zeigt eine Werkzeugmaschine mit einer Absaughaube 1 nach dem Stand der Technik. Der radiale Abstand A bzw. A' vom Werkzeug 3 zur Umfangswandung 4 der Absaughaube 1 wird vom Eintrittspunkt P des Werkzeugs 3 in Umdrehungsrichtung D des Werkzeugs 3 kleiner, so dass für die abgesaugten Späne oder Stäube im Bereich des Abstands A' ein Staudruck entsteht, der verhindert, dass sämtliche Späne in die Absaughaube 1 gesaugt werden und in den Absaugstutzen 2 abtransportiert werden.

Ein Teil der Späne wird aufgrund des Staudrucks wieder aus der Absaughaube 1 herausbefördert.

Figur 9 zeigt eine weitere Werkzeugmaschine nach dem Stand der Technik mit einer Absaughaube 1 mit einer Umfangswandung 4 und einem Absaugstutzen 2, in der sich ein Werkzeug 3 in Umdrehungsrichtung D dreht. Durch das Werkzeug 3 wird entweder im Gegenlauf GGL bzw. im Gleichlauf GLL ein Werkstück 7 vom Werkzeug 3 spanend bearbeitet. Dadurch dass das Werkstück 7 den Lufteinlassbereich der Absaughaube 1 stark verkleinert, wird die Strömungsgeschwindigkeit im Inneren der Absaughaube 1 stark verringert, so dass sich die Turbulenzen im Einlassbereich der Späne stark erhöhen und Späne wieder aus der Absaughaube 1 heraustreten und sich auf der Oberfläche des Werkstücks 7 festsetzen können.

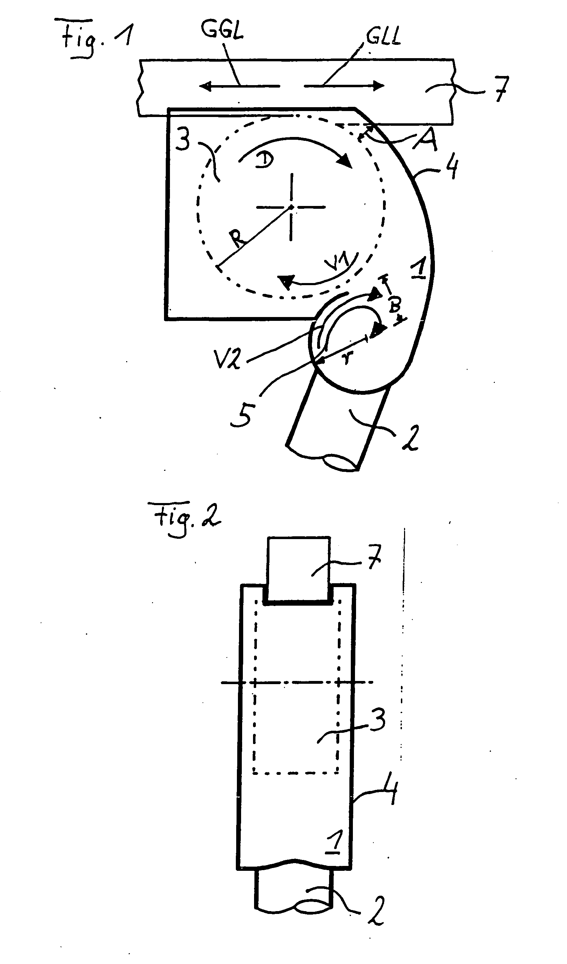

Figur 1 zeigt eine Werkzeugmaschine für die Bearbeitung von Holz, bestehend aus einer Absaughaube 1, einem Absaugstutzen 2 und einem Werkzeug 3. Die Absaughaube 1 weist eine sie umgebende, teilweise geöffnete Umfangswandung 4 auf. Das rotierende Werkzeug 3 weist eine Umdrehungsrichtung D und einen Radius R auf. Durch den Absaugstutzen 2 werden die durch spanabhebende Bearbeitung eines Werkstückes 7 erzeugten Späne abgesaugt. Im Inneren der Absaughaube 1 werden im Bereich des Absaugstutzens 2 bezogen auf die Umdrehungsrichtung D des Werkzeugs 3 gegensinnig gerichtete rotierende Luftwirbel 5 erzeugt. Die gegensinnig gerichteten rotierenden Luftwirbel 5 erzeugen eine Sperrwirkung, die verhindert, dass auch massearme Späne und Stäube aus der Absaughaube heraustreten und nahezu sämtliche Späne und Stäube in Richtung des Absaugstutzens 2 geführt und abgesaugt werden. Am Endpunkt der Umfangswandung 4 im Bereich des Absaugstutzens 2 sind der Richtungsvektor V1 der Luftwirbel am Werkzeug 3 und der Richtungsvektor V2 der Luftwirbel 5 gegensinnig gerichtet. Die Umfangswandung 4 kann in dem Bereich hinter dem gegensinnig zur Werkzeugdrehrichtung D rotierenden Luftwirbel 5 vollständig geöffnet oder aus einer luftdurchlässigen, durchbrochenen Wandung (z. B. Lochblech) gebildet sein. Ruhende Späne, die von außen an die umfangseitig offene Absaughaube 1 in den Bereich hinter dem Absaugstutzen 2 gelangen, werden zwischen Werkzeug 3 und Haubenwandung 4 entgegen der Eigenventilation des Werkzeugs 3 in die Absaughaube 1 gezogen. Durch die im Inneren der Absaughaube 1 erzeugten, gegensinnig zur Umdrehungsrichtung D des Werkzeugs 3 rotierenden Luftwirbel wird eine Art Injektorwirkung hervorgerufen, die den Spantransport entgegen der Umdrehungsrichtung D des Werkzeugs 3 ermöglicht bzw. Luft von außen in die Absaughaube 1 entgegen der Umdrehungsrichtung D des Werkzeugs 3 ansaugt. Die Umfangswandung 4 weist im Bereich B des Luftwirbels 5 eine Krümmung < 90 ° auf.

Figur 2 zeigt die Werkzeugmaschine aus Figur 1 in einer Seitenansicht. Die Absaughaube 1 der Werkzeugmaschine weist eine Umfangswandung 4 und einen Absaugstutzen 2 auf. Das sich im Inneren der Absaughaube befindliche Werkzeug 3 bearbeitet das an der Absaughaube 1 vorbeigeführte Werkstück 7. Die bei der spanabhebenden Bearbeitung des Werkstückes 7 entstehenden Späne werden innerhalb der Absaughaube 1 entlang der Umfangswandung 4 zum Absaugstutzen 2 geführt. Dabei sorgen gegensinnig zur Umdrehungsrichtung des Werkstücks 3 gerichtete rotierende Luftwirbel 5 dafür, dass keine Späne oder Stäube mehr aus der Absaughaube 1 heraustreten. Die Kontur der Umfangswandung 4 der Abdeckhaube 1 ist an die Kontur des Werkstücks 7 angepasst.

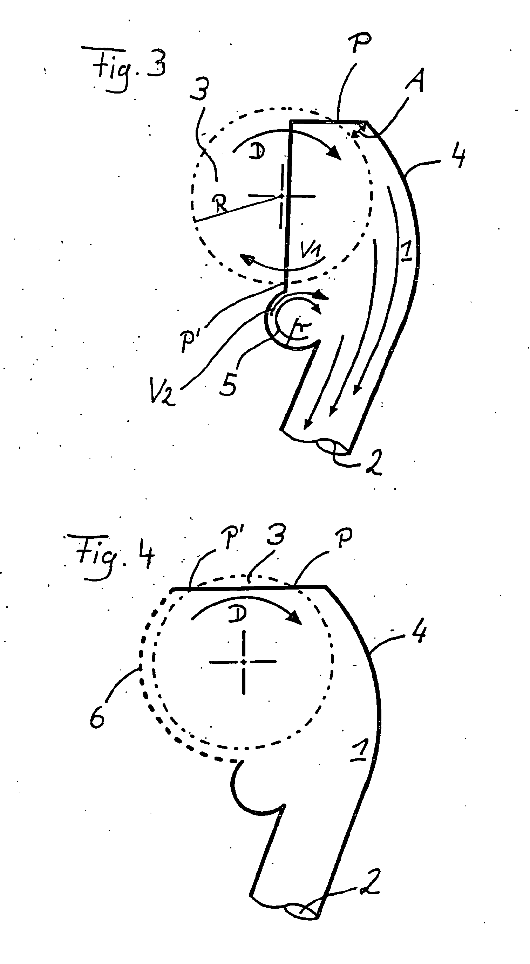

Figur 3 zeigt eine Werkzeugmaschine für die Bearbeitung von Holz, bestehend aus einer Absaughaube 1, einem Absaugstutzen 2 und einem Werkzeug 3. Die Absaughaube 1 weist eine sie umgebene, teilweise geöffnete Umfangswandung 4 auf, die einen radialen Abstand A vom Werkzeug 3 aufweist. Das Werkzeug 3 tritt am Eintrittspunkt P in die Absaughaube 1 ein und tritt am Austrittspunkt P' aus der Absaughaube 1 wieder heraus. Das rotierende Werkzeug 3 weist eine Umdrehungsrichtung D und einen Radius R auf. Durch den Absaugstutzen 2 werden die durch spanabhebende Bearbeitung eines Werkstückes erzeugten Späne abgesaugt. Im Inneren der Absaughaube 1 im Bereich hinter dem Absaugstutzen 2 werden am Austrittspunkt P' des Werkzeugs 3 bezogen auf die Umdrehungsrichtung D des Werkzeugs 3 gegensinnig gerichtete rotierende Luftwirbel 5 erzeugt. Im Punkt P' ist der Richtungsvektor V1 der Luftwirbel am Werkzeug 3 und der Richtungsvektor V2 der Luftwirbel 5 gegensinnig gerichtet. Durch die gegensinnige Ausrichtung der beiden Luftwirbel wird eine Sperrwirkung erzielt, die verhindert, dass auch massearme Späne und Stäube aus der Absaughaube heraustreten und nahezu sämtliche Späne und Stäube können in Richtung des Absaugstutzens 2 geführt und abgesaugt werden. Auch Späne, die sich außerhalb der Absaughaube 1 im Bereich des Austrittspunktes P' befinden, werden in die Absaughaube eingesaugt, da durch den gegensinnig zur Umdrehungsrichtung D des Werkszeugs 3 erzeugten Luftwirbel eine Art Injektorwirkung erzeugt wird, so dass Luft und Späne von außen entgegen der Eigenventilation des Werkzeugs 3 angesaugt werden.

Figur 4 zeigt die Werkzeugmaschine aus Figur 3 mit dem Unterschied, dass im bezogen auf die Umdrehungsrichtung D des Werkzeugs 3 hinter dem Absaugstutzen 2 liegenden Bereich eine durchbrochene Struktur 6, in diesem Fall ein Lochblech, vorgesehen ist. Durch dieses Lochblech kann sichergestellt werden, dass auch während der Bearbeitung von Werkstücken ein ausreichender Luftdurchsatz in der Absaughaube 1 vorhanden ist und die Luftwirbel 5 nicht zum Erliegen kommen. Der Austrittspunkt P' des Werkzeugs aus der Absaughaube 2 wird dabei in die Ebene des Eintrittspunktes verschoben.

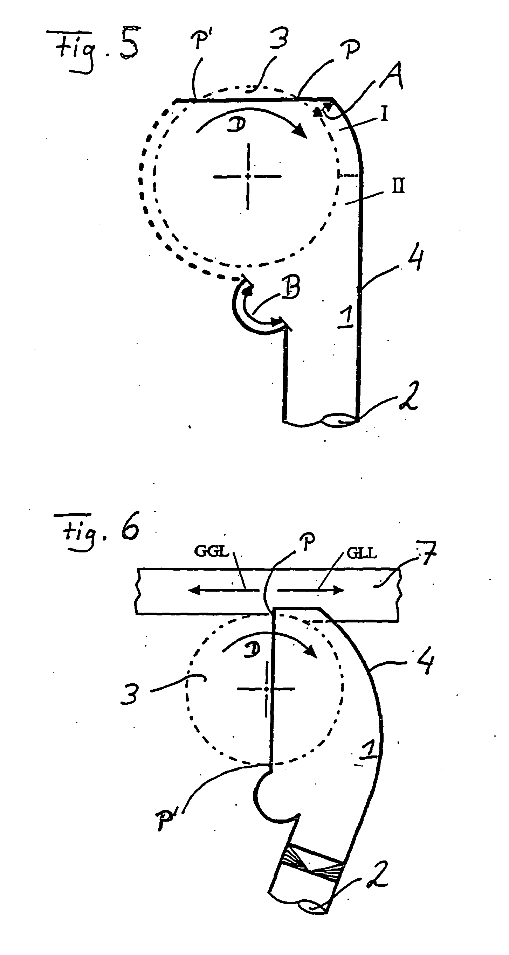

Figur 5 zeigt eine weitere Werkzeugmaschine gemäß Figur 4 mit einem Werkzeug 3, einer Absaughaube 1 mit einer Umfangswandung 4 und einem Absaugstutzen 2. Der radiale Abstand A zwischen der Umfangswandung 4 und dem Werkzeug 3 ist vom Eintrittspunkt P des Werkzeugs 3 in die Absaughaube 1 an konstant und vergrößert sich in Umdrehungsrichtung D des Werkzeugs 3 bis zum Absaugstutzen 2. Dadurch, dass sich der radiale Abstand A zwischen dem Werkzeug 3 und der Umfangswandung 4 nicht verringert, wird sichergestellt, dass zwischen der Umfangswandung 4 und dem Werkstück 3 im Inneren der Absaughaube 1 kein Staudruck entsteht, der dazu führen kann, dass die Luftströmung im Inneren der Absaughaube 1 abreißt und ein verschlechterter Span- bzw. Staubtransport in Richtung des Absaugstutzens 2 erfolgt. Insbesondere im ersten Bereich I ist der Abstand A von der Umfangswandung 4 zum Werkzeug 3 äquidistant. Im Bereich II vergrößert sich der Abstand A in Umdrehungsrichtung D des Werkzeugs 3 für einen optimierten Span- und Staubtransport. Die Umfangswandung 4 weist im Bereich hinter dem Absaugstutzen eine Krümmung B von 180° auf.

In Figur 6 wird eine Werkzeugmaschine mit einer Absaughaube 1 und einem Werkzeug 3 dargestellt. Durch das Werkzeug 3 wird ein Werkstück 7 im Gegenlauf GGL bzw. im Gleichlauf GLL spanabhebend bearbeitet. Auch bei der Bearbeitung des Werkstücks 7 wird der Lufteinlassbereich für die Absaughaube 1 nicht so stark verkleinert, dass ein Abriss der Luftströmung im Inneren der Absaughaube 1 entstehen könnte. Es verbleibt ein Lufteinlassbereich, der das Nachströmen von Luft in die Absaughaube 1 ermöglicht. Die Umfangswandung 4 der Absaughaube 1 umschließt das Werkzeug 3 nur teilweise.

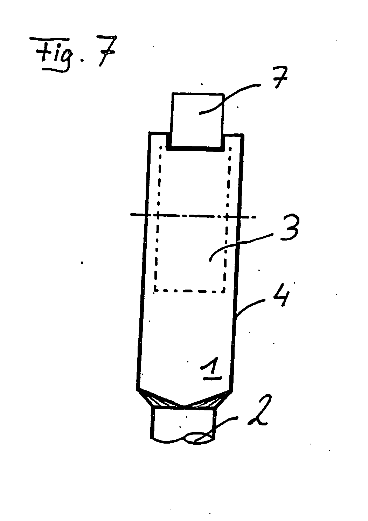

Figur 7 zeigt die Werkzeugmaschine aus Figur 3 in einer Seitenansicht. Die Absaughaube 1 der Werkzeugmaschine weist eine Umfangswandung 4 und einen Absaugstutzen 2 auf. Das sich im Inneren der Absaughaube 1 befindliche Werkzeug 3 bearbeitet das an der Absaughaube 1 vorbeigeführte Werkstück 7. Die bei der spanabhebenden Bearbeitung des Werkstückes 7 entstehenden Späne werden innerhalb der Absaughaube 1 entlang der Umfangswandung 4 zum Absaugstutzen 2 geführt. Dabei sorgen gegensinnig zur Umdrehungsrichtung des Werkstücks 3 gerichtete rotierende Luftwirbel 5 dafür, dass keine Späne oder Stäube mehr aus der Absaughaube 1 am Punkt P' heraustreten. Die Kontur der Umfangswandung 4 der Abdeckhaube 1 ist an die Werkstückkontur angepasst.

### Bezugszeichenliste

- 1: Absaughaube
- 2: Absaugstutzen
- 3: Werkzeug
- 4: Umfangswandung
- 5: Luftwirbel
- 6: durchbrochene Struktur
- 7: Werkstück
- A: Abstand
- A': Abstand
- P: Eintrittspunkt
- P': Austrittspunkt
- R: Radius
- r: Krümmungsradius
- D: Umdrehungsrichtung
- B: Krümmung
- I: Erster Bereich
- II: Zweiter Bereich
- V1: Richtungsvektor
- V2: Richtungsvektor

## Patentansprüche

1. Werkzeugmaschine, insbesondere Holzbearbeitungsmaschine, mit einem in Umdrehungsrichtung D rotierenden Werkzeug (3) zur spanabhebenden Bearbeitung und einer das Werkzeug (3) abdeckenden Absaughaube (1) mit einer teilweise geöffneten Umfangswandung (4), die einen radialen Abstand A zum Werkzeug (3) aufweist und die einen Absaugstutzen (2) zum Absaugen von Spänen aufweist, **dadurch gekennzeichnet, dass** bei der spanabhebenden Bearbeitung in der Absaughaube (1) im Bereich des Absaugstutzens (2) bezogen auf die Umdrehungsrichtung D des Werkzeugs (3) gegensinnig gerichtete rotierende Luftwirbel (5) erzeugbar sind und zur Erzeugung der Luftwirbel (5) im Bereich des Absaugstutzens (2) oder unmittelbar dahinter die Umfangswandung (4) der Absaughaube (1) mindestens einen Krümmungsradius r aufweist, der kleiner ist als der Radius R des Werkzeugs (3), sodass sich eine Umlenkung des Luftstromes entgegengesetzt zur Werkzeugdrehrichtung D ergibt, derart, dass am Endpunkt der Umfangswandung (4) im Bereich des Absaugstutzens (2) der Richtungsvektor (V1) der Luftwirbel am Werkzeug (3) und der Richtungsvektor (V2) der Luftwirbel (5) gegensinnig gerichtet sind.

2. Werkzeugmaschine nach Anspruch 1, **dadurch gekennzeichnet, dass** die gegensinnig rotierenden Luftwirbel (5) Luft von außen in die Absaughaube (1) entgegen der Drehrichtung (D) des Werkzeugs (3) saugen.

3. Werkzeugmaschine nach Anspruch 1 oder 2, **dadurch gekennzeichnet, dass** die Luftwirbel (5) bezogen auf die Umdrehungsrichtung D des Werkzeugs (3) in dem Bereich unmittelbar hinter dem Absaugstutzen (2) erzeugbar sind.

4. Werkzeugmaschine nach Anspruch 3, **dadurch gekennzeichnet, dass** die Krümmung kreisbogenförmig ist.

5. Werkzeugmaschine nach Anspruch 3 oder 4, **dadurch gekennzeichnet, dass** sich die Krümmung der Umfangswandung (4) in einem Bereich von 90 bis 270° erstreckt.

6. Werkzeugmaschine nach Anspruch 3 oder 4, **dadurch gekennzeichnet, dass** sich die Krümmung der Umfangswandung (4) in einem Winkel < 90° erstreckt.

7. Werkzeugmaschine nach einem oder mehreren der voranstehenden Ansprüche, **dadurch gekennzeichnet, dass** der radiale Abstand A der Umfangswandung (4) zum Werkzeug (3) in Umdrehungsrichtung D des Werkzeugs (3) zum Absaugstutzen (2) hin mindestens konstant bleibt oder sich vorzugsweise vergrößert.

8. Werkzeugmaschine nach einem oder mehreren der voranstehenden Ansprüche, **dadurch gekennzeichnet, dass** die Umfangswandung (4) bereichsweise eine durchbrochene Struktur (6), insbesondere eine Gitter- oder Lochstruktur aufweist.

9. Werkzeugmaschine nach Anspruch 8, **dadurch gekennzeichnet, dass** die die durchbrochene Struktur (6) im bezogen auf die Drehrichtung D des Werkzeugs (3) hinter dem Absaugstutzen (2) liegenden Bereich vorgesehen ist.

## Claims

1. Machine tool, in particular a wood-working machine, with a tool (3) for chip removal rotating in direction of rotation D and a suction hood (1) covering the tool (3) with a partially opened peripheral wall (4) that has a radial spacing A from the tool (3) and that has a suction nozzle (2) for suctioning off chips, **characterised in that** rotating air vortices (5) directed in the opposite direction based on the direction of rotation D of the tool (3) can be generated in the suction hood (1) in the area of the suction nozzle (2) during the chip removal and, to generate the air vortices (5) in the region of the suction nozzle (2) or directly behind it, the peripheral wall (4) of the suction hood (1) has at least one radius of curvature r, which is smaller than the radius R of the tool (3), so a deflection of the air flow is produced counter to the direction of rotation D of the tool in such a way that, at the end point of the peripheral wall (4) in the region of the suction nozzle (2), the direction vector (V1) of the air vortices at the tool (3) and the direction vector (V2) of the air vortices (5) are directed in opposite directions.

2. Machine tool according to claim 1, **characterised in that** the air vortices (5) rotating in opposite directions suck air from outside into the suction hood (1) counter to the direction of rotation (D) of the tool (3).

3. Machine tool according to claim 1 or 2, **characterised in that** the air vortices (5) can be generated in the area directly behind the suction nozzle (2) based on the direction of rotation D of the tool (3).

4. Machine tool according to claim 3, **characterised in that** the curvature is circular arc-shaped.

5. Machine tool according to claim 3 or 4, **characterised in that** the curvature of the peripheral wall (4) extends in a range of 90 to 270°.

6. Machine tool according to claim 3 or 4, **characterised in that** the curvature of the peripheral wall (4) extends at an angle of < 90°.

7. Machine tool according to one or more of the preceding claims, **characterised in that** the radial spacing A of the peripheral wall (4) from the tool (3) in the direction of rotation D of the tool (3) towards the suction nozzle (2) remains at least constant or preferably increases.

8. Machine tool according to one or more of the preceding claims, **characterised in that** the peripheral wall (4) has in parts a pierced structure (6), in particular a grid or perforated structure.

9. Machine tool according to claim 8, **characterised in that** the pierced structure (6) is provided in the area lying behind the suction nozzle (2) based on the direction of rotation D of the tool (3).

## Revendications

1. Machine-outil, en particulier machine à bois, comprenant un outil (3) pour l'usinage par enlèvement de copeaux rotatif dans un sens de rotation D, et un capot d'aspiration (1) qui recouvre l'outil (3) et comprend une paroi périphérique (4) partiellement ouverte présentant une distance radiale A par rapport à l'outil (3) et comportant un manchon d'aspiration (2) pour l'aspiration des copeaux, **caractérisée en ce que** lors de l'usinage par enlèvement de copeaux, des remous d'air (5) rotatifs orientés à contre-sens par rapport au sens de rotation D de l'outil (3) peuvent être engendrés dans le capot d'aspiration (1) dans la région du manchon d'aspiration (2), et pour engendrer les remous d'air (5), la paroi périphérique (4) du capot d'aspiration (1) présente dans la région du manchon d'aspiration (2) ou directement derrière au moins un rayon de courbure r qui est inférieur au rayon R de l'outil (3), de façon que s'ensuive une déflexion de l'écoulement d'air opposée au sens de rotation de l'outil D telle qu'à l'extrémité de la paroi périphérique (4) dans la région du manchon d'aspiration (2), le vecteur directionnel (V1) des remous d'air sur l'outil et le vecteur directionnel (V2) des remous d'air (5) soient de sens opposés.

2. Machine-outil selon la revendication 1, **caractérisée en ce que** les remous d'air (5) rotatifs à contre sens aspirent de l'air de l'extérieur vers le capot d'aspiration (1) en sens inverse du sens de rotation (D) de l'outil (3).

3. Machine-outil selon la revendication 1 ou 2, **caractérisée en ce que** par rapport au sens de rotation D de l'outil (3) les remous d'air (5) peuvent être engendrés dans la région directement derrière le manchon d'aspiration (2).

4. Machine-outil selon la revendication 3, **caractérisée en ce que** la courbure est en forme d'arc de cercle.

5. Machine-outil selon la revendication 3 ou 4, **caractérisée en ce que** la courbure de la paroi périphérique (4) s'étend dans une région allant de 90 à 270°.

6. Machine-outil selon la revendication 3 ou 4, **caractérisée en ce que** la courbure de la paroi périphérique (4) s'étend sur un angle <90°.

7. Machine-outil selon l'une ou plusieurs des revendications précédentes, **caractérisée en ce que** la distance radiale A de la paroi périphérique (4) à l'outil (3) reste au moins constante, ou de préférence s'accroît, en allant vers le manchon d'aspiration (2), dans le sens de rotation D de l'outil (3).

8. Machine-outil selon l'une ou plusieurs des revendications précédentes, **caractérisée en ce que** la paroi périphérique (4) présente localement une structure (6) ajourée, en particulier une structure grillagée ou percée.

9. Machine-outil selon la revendication 8, **caractérisée en ce que** la structure (6) ajourée est prévue dans la région se trouvant derrière le manchon d'aspiration (2) par rapport au sens de rotation D de l'outil.
